# EUROPÄISCHE PATENTANMELDUNG

(11) **EP 0 650 155 A1**
(43) Veröffentlichungstag der Anmeldung: **26.04.1995**
(21) Anmeldenummer: 94116143.2
(22) Anmeldetag: 13.10.1994
(51) Int. Cl.: G09F 13/18, F21V 8/00

(54) **Gleichmässig ausgeleuchtete mehrschichtige Verbundsysteme**

(30) Priorität: 21.10.1993 DE 9316096 U
(71) Anmelder: Röhm GmbH, D-64293 Darmstadt (DE)
(72) Erfinder: Fischer, Udo, Dr.-Ing., D-62497 Darmstadt (DE)

(57) **Zusammenfassung**

Die Erfindung betrifft Verbundsysteme mit Lichtleiterelementen (1), die von den Kanten her beleuchtet werden, bestehend aus einem Kunststoffmaterial A mit einem spektralen dekadischen Absorptionsmaß nach DIN 1349 von höchstens 0,035, und auf welchen gegebenenfalls Informationen (7) aufgebracht sind, sowie mit Abdeckelementen (2), bestehend aus einem Kunststoffmaterial B mit einem spektralen dekadischen Absorptionsmaß nach DIN 1349 von mindestens 0,04, wobei sich zwischen Lichtleiterelementen (1) und Abdeckelementen (2) vorzugsweise ein Hohlraum (3) befindet.

## Beschreibung

### Gebiet der Erfindung

Die Erfindung betrifft Verbundsysteme mit Lichtleiterelementen (1), die von den Kanten her beleuchtet werden und die aus einem Kunststoffmaterial A mit einem niedrigen Absorptionskoeffizienten für sichtbares Licht bestehen, wobei die Lichtleitelemente (1) mit Abdeckelementen (2) solchermaßen verbunden sind, daß sich Lichtleiterelemente (1) und Abdeckelemente (2) vorzugsweise nicht berühren und wobei die Abdeckelemente (2) aus einem Kunststoffmaterial (B) aufgebaut sind, das einen im Vergleich zum Kunststoffmaterial A höheren Absorptionskoeffizienten für sichtbares Licht aufweist.

### Stand der Technik

Bekannt sind verschiedene Verbunde, die Lichtleiterplatten und weitere mit diesen verbundene Plattenelemente umfassen. So beschreibt beispielsweise DE-OS 42 20 727 eine flächenstrahlende Beleuchtungseinheit, gekennzeichnet durch eine lichtübertragende Leuchtplatte mit einer Mehrzahl von Lichtleiterplatten, die schichtweise derart übereinander angeordnet sind, daß die Seiten der Lichtleiterplatten, in welche das Licht eintritt, auf einem Niveau zueinander liegen, während die anderen Seiten, auf welchen das Licht austritt, stufenförmig angeordnet sind.

DE-Gbm 89 00 178 umfaßt räumlich wirkende Informationsträger aus einem Paket aufeinanderliegender, klarsichtiger Platten, von denen wenigstens ein Teil auf wenigstens einer Seite eine Information trägt, wobei die auf den Platten des Pakets befindlichen Informationen im wesentlichen senkrecht zu den Platten hintereinander fluchtend angeordnet sind und wobei seitlich eine einstrahlende Lichtquelle angeordnet ist.
Desweiteren ist aus DE-OS 40 09 513 ein Leuchtbild bekannt, bestehend aus einer durchsichtigen, beleuchteten Scheibe mit Darstellungen von Zeichen und/oder Bildern, dadurch gekennzeichnet, daß die Scheibe mindestens 3 Lagen aus rückstrahlendem Material aufweist, daß auf der mittleren Lage und/oder den Innenflächen der äußeren Lagen graphische Motive durch Einschnitte als Relief ausgebildet sind und daß zur Beleuchtung der gesamten Scheibe mindestens eine längliche Lampe parallel zur Kante der Scheibe angeordnet ist.
EP-A 497 506 beschreibt mehrschichtige Verbundsysteme für beleuchtete Hinweisschilder, die die Kombination einer transluzenten Platte mit einer durchsichtigen Beschichtung umfassen, wobei die transluzente Platte aus einem Polymerisat mit einer Lichttransmission > 80 % besteht, in das lichtstreuende Polymerpartikel aus einem Copolymerisat enthaltend Alkylacrylat eingelagert sind.

### Aufgabe und Lösung

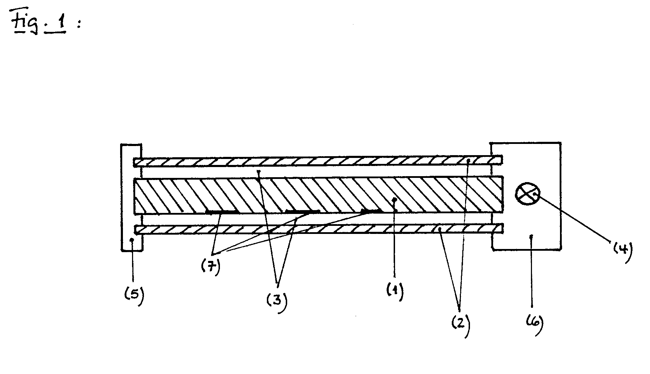

Für den Betrieb von Signal- oder Beleuchtungsvorrichtungen, die als wesentliches Element kantenbeleuchtete Lichtleiterelemente umfassen, ist die Oberflächenbeschaffenheit des Lichtleiterelements von höchster Bedeutung. Weist die Oberfläche des Lichtleiterelements Unebenheiten, wie beispielsweise Kratzlinien, Löcher oder partikelförmige Anlagerungen, z.B. Staubteilchen, auf, so wirken diese Unebenheiten als störende Streuelemente, die das Licht aus dem Lichtleitelement auskoppeln und die damit optisch als leuchtende Linien oder Punkte in Erscheinung treten. Dies ist beispielsweise bei der kontrollierten Lichtauskopplung bei Informationsträgern, wie sie z.B. in DE-OS 40 09 513 beschrieben werden, ein großer Störfaktor.
Die erfindungsgemäße Vorrichtung löst die sich hieraus ergebende Aufgabe hervorragend. Sie umfaßt Verbundsysteme mit Lichtleitelementen (Fig. 1), die von den Kanten her beleuchtet werden und die aus einem Kunststoffmaterial A mit spektralen dekadischen Absorptionsmaßen von höchstens 0,035 nach DIN 1349 für den gesamten Wellenlängenbereich des sichtbaren Lichts bestehen, auf welchen gegebenenfalls Informationen (7) aufgebracht sind, die durch Streulicht ausgekoppelt werden, mit dem kennzeichnenden Merkmal, daß die Lichtleiterelemente mit Abdeckelementen (2) verbunden sind, die ihrerseits aus Kunststoffmaterialien B mit spektralen dekadischen Absorptionskoeffizienten von mindestens 0,04 nach DIN 1349 für den gesamten Wellenlängenbereich des sichtbaren Lichts bestehen, und daß sich vorzugsweise zwischen den Lichtleiterelementen (1) und den Abdeckelementen (2) ein Hohlraum (3) befindet, mit der Maßgabe, daß sich Lichtleiterelemente (1) und Abdeckelemente (2) in dem Bereich, wo die Information durch Streulicht ausgekoppelt wird, nicht berühren. Der Hohlraum (3) wird durch spezielle Rahmenelemente (5,6) realisiert, die die Lichtleiterplatte (1) und die Abdeckplatte(n) (2) auf Distanz halten. In eines der Rahmenelemente (6) wird in einer bevorzugten Ausführungsform der Erfindung die Lichtquelle (4), die zur Beleuchtung der Kante der Lichtleiterplatte (1) eingesetzt wird, integriert.

### Durchführung der Erfindung

Als Kunststoffmaterialien A für die Lichtleiterelemente (1) finden vorzugsweise Kunststoffe mit spektralen dekadischen Absorptionsmaßen AM (λ) von höchstens 0,035 nach DIN 1349, bevorzugt von höchstens 0,034, über den gesamten Wellenlängenbereich des sichtbaren Lichts Verwendung, wobei ganz besonders bevorzugt Polymethylmethacrylat eingesetzt wird. Die Kunststoffmaterialien A für die Lichtleiterelemente (1) können in bekannter Weise zur lokalen Lichtauskopplung Streuteilchen, ggfs. in lokal unterschiedlicher Konzentration enthalten. Weiterhin können die Lichtleiterelemente, wie in EP-A 533 301 beschrieben, ganzflächig oder teilflächig eine zumindests teilweise reflektierende, die Totalreflexion unterbrechende Beschichtung, Kaschierung, Aufrauhung oder Struktur aufweisen, die zur Verbesserung der Lichtverteilung beiträgt.
Kunststoffmaterialien B für die Abdeckelemente (2) sind vorzugsweise Kunststoffe mit Lichttransmissionswerten, die niedriger als diejenigen der Kunststoffmaterialien A liegen. Bevorzugt werden Kunststoffe B mit spektralen dekadischen Absorptionsmaßen AM (λ) von mindestens 0,04 nach DIN 1349 über den gesamten Wellenlängenbereich des sichtbaren Lichts, bevorzugt mit Absorptionsmaßen von mindestens 0,045. Besonders bevorzugt werden Kunststoffe B eingesetzt, die eine hohe mechanische Beanspruchungsfestigkeit aufweisen, ausgedrückt beispielsweise durch hohe Schlagzähigkeits- oder Kerbschlagzähigkeitswerte nach ISO 179 bzw. ISO 180, und die mit verschiedenen Beschichtungen, wie beispielsweise Kratzfest-, Antireflex- oder wellenlängenspezifisch absorbierenden Beschichtungen, versehen werden können. Ganz besonders bevorzugt werden Polycarbonate als Kunststoffe B zur Konstruktion der Abdeckelemente (2) eingesetzt, wobei die Abdeckelemente (2) in einer weiteren bevorzugten Ausführungsform mit einer kratzfesten und reflexionsvermindernden Beschichtung versehen sind. Zur Herstellung dieser Beschichtungen sei exemplarisch auf die europäischen Patentschriften EP-PS 180 129 und EP-PS 245 728 verwiesen.
Zwischen den Lichtleiterelementen (1) und den Abdeckelementen (2) befindet sich ein Hohlraum (3), dessen Geometrie durch die Rahmenelemente (5) und (6) festgelegt ist. Bevorzugt weist der Abstand zwischen Lichtleiterelement (1) und Abdeckelement (2) an jeder Stelle des Verbundes den gleichen Wert auf. In einer besonderen Ausführungsform der Erfindung haben Lichtleiterelement (1) und Abdeckelement (2) beide eine Plattengeometrie, die durch umlaufende Rahmenelemente (5) und (6) begrenzt wird. Weiterhin kann das Lichtleiterelement (1) beispielsweise die Form eines Rundstabs haben während das Abdeckelement (2) die Form eines zylindrischen Hohlkörpers hat, der durch die Rahmenelemente (5) und (6) zum Lichtleitelement (1) in eine solche räumliche Anordnung gebracht wird, daß das Lichtleiterelement (1) im zylindrischen Abdeckelement (2) zentrisch angeordnet ist.
Das Lichtleiterelement (1) wird mittels einer Lichtquelle (4), die vorzugsweise in einem der Rahmenelemente (6) integriert ist, von der Kante her beleuchtet. Sind die Lichtleiterelemente (1) von plattenartiger Geometrie, so ist die Lichtquelle (4) vorzugsweise ein Leuchtkörper von röhrenförmiger Gestalt, während bei stabförmigen Lichtleiterelementen (1) die Lichtquelle (4) bevorzugt punktförmig gestaltet ist. Als Lichtquellen (4) werden an sich übliche Leuchtkörper, wie beispielsweise Glühbirnen oder Leuchtstoffröhren, verwendet.
Die Information (7) wird direkt auf dem Lichtleiterelement (1) aufgebracht. Dies kann beispielsweise durch Aufkaschieren von Folien, durch Eingravieren im Lichtleiterelement (1), durch Siebdruck auf dem Lichtleiterelement (1), durch Mattieren bestimmter Stellen des Lichtleiterelements (1) oder durch Lackieren des Lichtleiterelements (1) geschehen. Vorzugsweise wirken die die Information tragenden Flächen durch die Auskopplung höherer Streulichtanteile. Weiterhin können graphische Motive durch Einschnitte als reliefartige Information (7) ausgebildet sein.

### Vorteilhafte Wirkungen der Erfindung

Die erfindungsgemäßen Verbundsysteme, enthaltend Lichtleiterelemente (1) und Abdeckelemente (2), sind durch die spezielle Gestaltung extrem unempfindlich gegen Stoß und Verkratzen. Dies ist insbesondere für aus solchen Verbundsystemen aufgebauten Informationsträger wichtig, die der natürlichen Witterung ausgesetzt sind. Die extrem niedrigen spektralen Absorptionsmaße oder die hohen spektralen Transmissionsgrade der Lichtleiterelemente (1) ermöglichen mit Hilfe der Kantenbeleuchtung eine großflächige Informationsdarstellung mit Leuchtkörpern (4) geringer Lichtleistung in besonders flacher Bauweise. Durch eine Anitreflexbeschichtung bzw. durch spezielle Farbfilterschichten auf den Abdeckelementen (2) können bessere Lesbarkeit bzw. besondere Gestaltung der Information (7) realisiert werden, ohne die Lichtleiterelemente (1) direkt zu verändern. Dies ermöglicht Baukastensysteme mit variablen Lichtleiterelementen (1) und/oder variablen Abdeckelementen (2).

## Patentansprüche

1. Verbundsysteme mit Lichtleiterelementen (1), die von den Schnittkanten her beleuchtet werden und aus einem Kunststoffmaterial A bestehen, und Abdeckelementen (2), die aus einem Kunststoffmaterial B bestehen,
dadurch gekennzeichnet,
daß das spektrale dekadische Absorptionsmaß des Kunststoffmaterials A nach DIN 1349 maximal 0,035 beträgt und das spektrale dekadische Absorptionsmaß des Kunststoffmaterials B nach DIN 1349 mindestens 0,04 beträgt.

2. Verbundsysteme mit Lichtleiterelementen (1) und Abdeckelementen (2) gemäß Anspruch 1, dadurch gekennzeichnet, daß die Abdeckelemente (2) beschichtet sind.

3. Verbundsysteme mit Lichtleiterelementen (1) und Abdeckelementen (2) gemäß den Ansprüchen 1 und 2, dadurch gekennzeichnet, daß die Lichtleiterelemente (1) und die Abdeckelemente (2) durch Hohlräume (3) getrennt sind.

4. Verbundsysteme mit Lichtleiterelementen (1) und Abdeckelementen (2) gemäß den Ansprüchen 1 bis 3, dadurch gekennzeichnet, daß die Lichtleiterelemente (1) und die Abdeckelemente (2) von plattenförmiger Geometrie sind.

5. Verbundsysteme mit Lichtleitelementen (1) und Abdeckelementen (2) gemäß den Ansprüchen 1 bis 4, dadurch gekennzeichnet, daß unmittelbar auf den Lichtleiterelementen (1) Information tragende Flächen (7) angebracht sind, die höhere Streulichtanteile auskoppeln als die Flächen, die keine Information tragen.

6. Verbundsysteme mit Lichtleiterelementen (1) und Abdeckelementen (2) gemäß den Ansprüchen 1 bis 5, dadurch gekennzeichnet, daß die räumliche Anordnung der Lichtleiterelemente (1) und der Abdeckelemente (2) durch Rahmenelemente (5) und (6) fixiert ist.
